(19) Europäisches Patentamt
European Patent Office
Office européen des brevets

(11) Publication number: **0 123 562**
**B1**

## EUROPEAN PATENT SPECIFICATION

(45) Date of publication of patent specification: 18.07.90

(51) Int. Cl.⁵: **G 01 S 5/02**

(21) Application number: **84302814.3**

(22) Date of filing: **26.04.84**

(54) Vehicule route finding system.

(30) Priority: 26.04.83 GB 8311303

(43) Date of publication of application:
31.10.84 Bulletin 84/44

(45) Publication of the grant of the patent:
18.07.90 Bulletin 90/29

(84) Designated Contracting States:
AT BE CH DE FR GB IT LI LU NL SE

(56) References cited:
FR-A-2 414 733    US-A-3 766 552
US-A-3 750 166    US-A-4 106 022
PROCEEDINGS OF THE NATIONAL
ELECTRONICS CONFERENCE, vol. 34, 1980,
pages 359-362, Oakbrook, Illinois, USA; D.J.
BERRY et al.: "Electronic correction systems for
LORAN-C signals reception (ECSLSR)"
WESCON TECHNICAL PAPERS, vol. 20, part 20,
paper 33/3, pages 1-7 of part 33/3, North
Hollywood, USA; J. VAN DEWERKER: "Loran
vehicle location systems"

(73) Proprietor: BRITISH TELECOMMUNICATIONS
public limited company
81 Newgate Street
London EC1A 7AJ (GB)

(72) Inventor: Hughes, Charles Joseph
53 Princess Road
Felixtowe Suffolk IP11 7PL (GB)

(74) Representative: Buttrick, Richard et al
British Telecommunications plc Intellectual
Property Unit 151 Gower Street
London WC1E 6BA (GB)

(56) References cited:
IEEE TRANSACTIONS ON VEHICULAR
TECHNOLOGY, vol. VT-26, no. 2, May 1977,
pages 187-191, New York, USA; D.J. SYMES:
"Multiuser area-coverage automatic vehicle
monitoring program"
PATENTS ABSTRACTS OF JAPAN, vol. 6, no.
156(P-135)(1034), 17th August 1982; & JP - A - 57
73616 (FURUNO DENKI K.K.) 08-05-1982

Courier Press, Leamington Spa, England.

## Description

This invention relates to a vehicle route finding system. More particularly it relates to a system whereby the geographical location of a road vehicle can be accurately determined and a route to a desired destination indicated to the driver of that vehicle.

Radio navigational (position finding) systems such as Loran-C have now been developed to the stage where they can be used to determine the geographical location of a mobile station such as a vessel, aircraft or land-based vehicle to within a few tens of metres. Loran-C is a pulsed low frequency (100 KHz) hyperbolic radio navigation system in which a master transmitting station and two or more secondary stations all of known location transmit a pulsed signal. By measuring the time delay between the reception of a signal from two pairs of stations, a vehicle borne receiver can locate its position. Fuller details of the operation of the Loran system can be found in Loran-C User Handbook published by US Coastguard, Department of Transportation (May 1980).

The use of radio position finding systems such as Loran-C, or Decca, for land-based vehicles has been proposed in the past (e.g. US Patents 3711856, 3766552, and 4106022). However, partly for reasons of cost, and partly for reasons of insufficient accuracy, radio position finding systems, while employed for many years for aircraft and ship navigation, have so far found little practical use for land vehicle navigation.

As regards accuracy, it is the inherent inaccuracy of the radio navigation systems which has thus far militated against their widespread practical application for locating and guiding land vehicles, as the demands on accuracy are much greater for guiding a vehicle within the strict confines of a roadnetwork. The problem of insufficient accuracy for land-based navigation is compounded by obstacles, such as raised terrain, and buildings and other structures, in the path of the radio waves. Such obstacles may cause propagation errors which, in their turn, lead to inaccurate or ambiguous determination of the position of a vehicle.

The aforementioned US Patents 3711856 (D. J. Adrian) and 4106022 (J. D. Last), are concerned with reducing the cost of radio navigation systems. According to the disclosure in these patents low cost radio navigation systems can be provided by transferring the process of calculating the position of a mobile station from the mobile station to a central computer. This transfer of processing is accomplished by retransmitting the position information received at the mobile station in a suitable manner to the computer, thus enabling the equipment carried on the mobile station itself to be comparatively simple. The two patents propose different ways of performing the re-transmission with the least possible degradation of the position information. US Patent 4106022 also refers in passing to the possibility of employing a fixed reference receiver station in addition to the mobile stations and the fixed navigation transmitters, and using the difference between the apparent position and the actual position of the fixed reference station to compensate for propagation errors.

The present invention is based on the appreciation by the applicants that the mobile stations provide a suitable and flexible means for increasing the accuracy of position finding and route guidance by radio navigation.

A vehicle position determination and navigation system having features corresponding generally to the preamble of claim 1 can be found in FR—A—2414733.

According to the invention, there is provided a vehicle route-finding system comprising:
—a base station having a computer linked with first communication means;
—a plurality of vehicle-borne mobile stations, each of which has a receiver for receiving signals from a radio navigation system and for deriving from the received signals information relating to the location of that vehicle, and second communication means for communicating with the first communication means so as to provide the location-related information to the computer;
—the computer being arranged to calculate, on the basis of known position data of known locations and the location-related information derived for these locations, correction data for correcting the location-related information for errors caused by radio propagation irregularities, characterised in that:
—each second communication means is arranged to transmit to the base station, upon command from the driver of the corresponding vehicle, information defining a desired destination having known position data and a signal indicating to the computer the arrival of the vheicle at the desired destination;
—the computer is arranged to calculate the correction data in response to the arrival-indicating signals, from the position data of the destination reached and the associated location-related information, to apply the calculated correction data to subsequently received location-related information, and to update the correction data when arrival of a vehicle at a destination at a known location is signalled to the computer; and
—the first communication means is arranged to transmit vehicle routing information generated by the computer.

The means to communicate the known or true position may conveniently comprise means for providing a clearance signal to the computer on arrival at the destination, and/or means to input and transmit the true position at the beginning of a journey when the starting position is known.

In addition, or as an alternative to means for communicating the true position at the beginning and/or the end of a journey, there may be provided vehicle borne means to provide additional information about the true position of the vehicle. These may comprise, for example, means to measure the distance travelled from the starting or another suitably chosen reference point, or for example an accelerometer which indicates vehicle acceleration, in particular centripetal accelerations as the vehicle travels round corners.

The position information received at the vehicle is preferably transmitted to the computer via a conventional mobile radio communications system, such as, for example, a cellular radio system.

By using the mobile stations of the system to provide the position information required to enable the computer to correct for propagation errors, it becomes possible to progressively refine the position finding provided by the system since even a relatively small number of mobile stations will in due course accumulate a large number of visited destinations. By thus obtaining frequent up-dating of the position information held in the computer, it is also possible to provide an adaptive system of vehicle position finding and route guiding, since there will usually be a sufficiently large number of transmissions to ensure dynamic readjustment of the position information when, for example, a new building being erected causes a systematic change in the propagation pattern.

A preferred embodiment of the present invention will now be described with reference to the accompanying drawings, of which:—

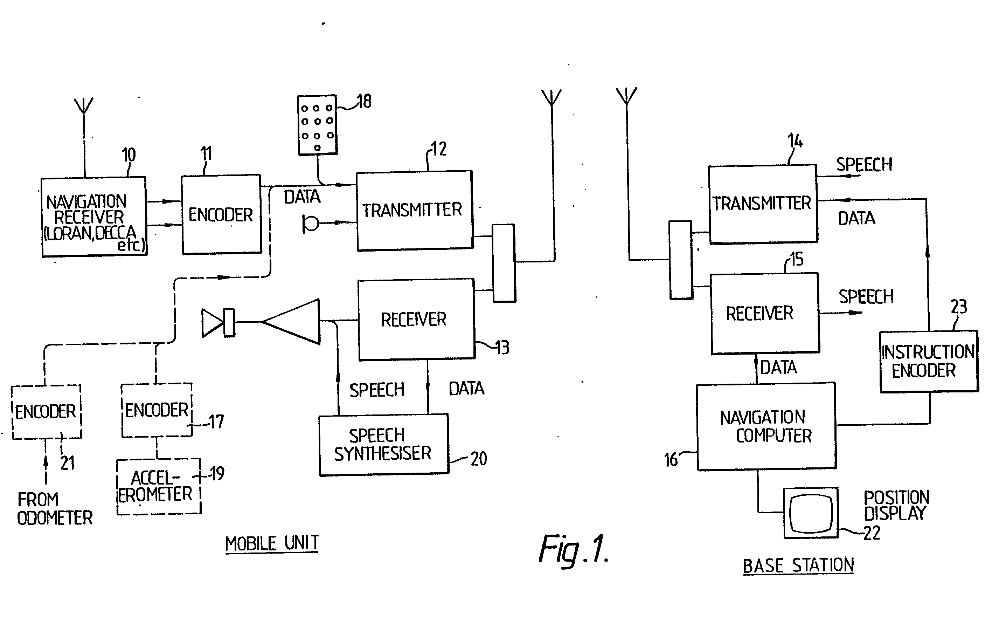

Figure 1 is a schematic block diagram of a mobile station and a base station of a vehicle route finding system, and

Figure 2 serves to illustrate a method of calculating corrections in position.

In the system according to the invention, a navigation receiver 10 such as a Loran receiver, is carried by the vehicle. The pulse time difference data from the receiver 10 passes to an encoder 11 and a radiotelephone transmitter 12 from where it is transmitted to a base station 14. A computer 16 at the base station calculates the vehicle's position taking into account any known propagation irregularities. These will conveniently have been obtained in the manner detailed below, and may, for example be stored in the computer as a table of corrections.

The vehicle driver initially indicates his desired destination or a series of destinations to the computer 16 at the base station 14 by way of a keyboard 18 connected to his radiotelephone 12. The position may be in the form of X-Y coordinates in relation to a street map, or alternatively he may key in the street name and building number for conversion to X-Y coordinates in the central computer. The computer 16 being now in possession of the vehicle's location and desired destination, computes an optimum route to that destination and relevant instructions are transmitted to the driver over the radiotelephone link in the form of appropriately coded data. These instructions are received by a radiotelephone receiver 13 and are either displayed to the driver in a head-up display (not shown) or given orally by a synthesized voice unit 20 operating through the audio stages of the radiotelephone.

The communication channel between the vehicle and the base station is maintained either continuously or intermittently such that as the vehicle moves along the route, its changing position as determined by the data from the receiver 10, allows the computer 16 to update the route instructions information to the driver. Any deviations by the driver from the optimum route can be taken into account by the computer which will compute a new optimum route and issue appropriate instructions.

An additional feature may be provided in the form of a 'help' button which when pressed by a driver who has lost his way or is not confident that he is able to continue the journey by following the latest set of instructions, generates a special signal followed by the received Loran-C readings. On receipt of this special 'help' signal, the computer will give immediate directions such as to enable the driver to find his way again.

On reaching his destination, the driver sends an "arrival" signal to the central unit. The computer calculates and stores the charges to be incurred and then either clears the route calculations or, in the case of multiple destinations, awaits a restart signal from the mobile.

The "arrival", or clearance, signal which is sent by the driver on arrival at his destination, provides the computer with an indication of the true position of the vehicle since the physical location of the destination is known to the computer 16. Thus, if transmitted to the computer 16, together with the received Loran-C readings for that location, it enables the computer, from any discrepancies between the computed location derived from the Loran-C readings and the actual location, to correct for propagation irregularities in subsequent position determinations for vehicles in that area. A further check may be carried out if the driver were to key in his known starting position, and these be transmitted together with the received Loran-C readings for that position, at the start of his journey.

The errors in the position as determined from the time- or phase-differences of the navigation system are caused mainly by variations in the terrain over which pass the radiowaves from the navigation transmitters. One method of calculating the correction for such errors is as follows.

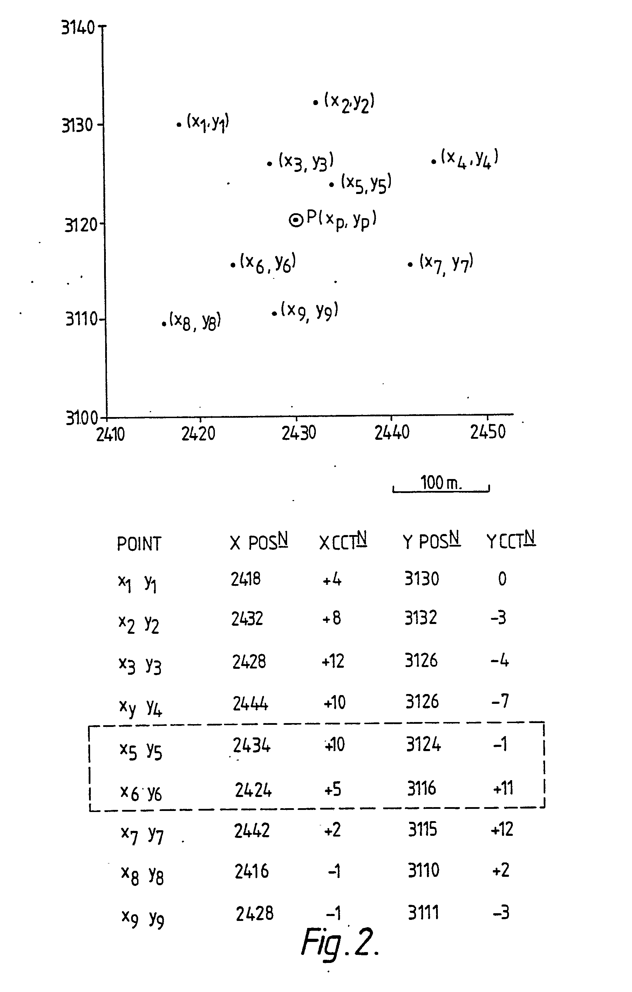

The first step is to transform the position as determined by the time- or phase-differences in the radio navigation system to X-Y coordinates. Techniques for achieving this transformation are well known and are used in several radio navigation systems. The calculation gives the apparent position in relation to the map grid, e.g. the Ordnance Survey grid reference, in the form of two 4-digit numbers to provide an accuracy of ten metres. For example the apparent position of point P in the graph of Figure 2 would be (2430, 3120).

Figure 2 shows the point P together with points $(x_1, y_1)$, $(x_2, y_2)$ etc. for which corrections to the apparent positions have been already determined on previous occasions as shown in the table of Figure 2.

The known points closest to P are next calculated from

$$d_r=[(x_r-x_p)^2+(y_r-y_p)^2]^{1/2}$$

In the example shown, it is evident that the point with coordinates $(x_5, y_5)$ is closest.

The second closest point to P on the opposite side of it is then found. This requires the conditions

$$sign\ (x_r-x_p)\neq sign\ (x_5-x_p)$$

and

$$sign\ (y_r-y_p)\neq sign\ (y_5-y_p)$$

In the example shown, the point with coordinates $(x_3, y_3)$ will not fulfil these latter conditions although it is the second closest point to P. The point with coordinates $(x_6, y_6)$ is therefore chosen.

The X and Y corrections to be applied to the coordinates of point P are then calculated by interpolation to be +8 and +5 respectively so that the true position of P is (2438, 3125).

Since the corrected position coordinates are available at the central computer, it is a simple matter to display the vehicle position on a visual display unit 22 superimposed on a street map. This facility is particularly useful for operators of fleets of vehicles (delivery vans, hire cars, etc.) as it enables them to know the position of all vehicles at all times.

Algorithms for finding the shortest route subject to known constraints between two points on a plane are well established. For vehicle route-finding, the main constraint is that the route must follow roads suitable for vehicles, with directional restrictions (one-way streets) where necessary. Account can also be taken of temporary restrictions such as road works, accidents, etc.

If it is assumed that minimum journey time rather than minimum distance is important to most users, the central computer can work out routes to avoid known areas of traffic congestion at certain times. By accumulating experience for a large number of monitored journeys, an intelligent knowledge based system can be built up to provide the quickest route between any two points in the area covered. The system may therefore be used even by drivers who are familiar with the route to provide the shortest journey time.

If a substantial number of users are making journeys at the same time, the computer can take account of the additional "congestion" it could cause by routing vehicles along particular streets. Some of the vehicles could then be directed along alternative routes. Thus if the use of the system becomes widespread, it would provide an effective means of overall traffic control in urban areas.

Although the system hereinbefore described will for many purposes provide adequate position indication and route direction in most areas, further information may be fed back from the vehicle to the central computer 16, over the radio link to give increased accuracy. This is particularly advantageous if noise and/or interference reduces the effectiveness of the radio navigation signal.

Examples of such additional sources of information are:

a. the vehicle odometer reading; this gives a check on distance travelled;

b. accelerometer 19; this indicates the vehicle accelerations, particularly the centripetal accelerations as the vehicle goes round corners, etc.

The information is suitably encoded in encoders 21 and 17 respectively and fed to the transmitter 12.

Although the preferred embodiment of the invention makes use of the existing Loran-C radio navigation system, any other system of comparable accuracy and which would allow for a vehicle borne receiver of convenient size, could be used.

**Claims**

1. A vehicle route-finding system comprising:
—a base station (14, 15, 16, 23) having a computer (16) linked with first communication means (14, 15);
—a plurality of vehicle-borne mobile stations (10—13, 17—21), each of which has a receiver (10) for receiving signals from a radio navigation system and for deriving from the received signals information relating to the location of that vehicle, and second communication means (12, 13) for communicating with the first communication means so as to provide the location-related information to the computer (16);
—the computer being arranged to calculate, on the basis of known position data of known locations and the location-related information derived for these locations, correction data for correcting the location-related information for errors caused by radio propagation irregularities, characterised in that:
—each second communication means (12, 13) is arranged to transmit to the base station, upon command from the driver of the corresponding vehicle, information defining a desired destination having known position data and a signal indicating to the computer the arrival of the vehicle at the desired destination;
—the computer (16) is arranged to calculate the correction data in response to the arrival-indicating signals, from the position data of the destination reached and the associated location-related information, to apply the calculated correction data to subsequently received location-related information, and to update the correction data when arrival of a vehicle at a destination, which is a known location, is signalled to the computer; and
—the first communication means (14, 15) is arranged to transmit vehicle routing information generated by the computer.

2. A system as claimed in claim 1, wherein the communication means of each mobile station includes a mobile radio communications trans- mitter/receiver (12, 13), and wherein the computer (16) is situated at a fixed central location.

3. A system as claimed in claim 1 or claim 2, wherein the communication means (12, 13) of each mobile station comprises cellular radio communication means.

4. A system as claimed in any of claims 1 to 3, wherein each mobile unit is provided with a speech synthesizer device, whereby the routing information can be communicated to the driver of the associated vehicle.

5. A system as claimed in any one of claims 1 to 4, wherein each mobile station is provided with a vehicle motion monitoring device (19), whose output is communicated to the computer (16).

6. A system as claimed in claim 5, wherein each motion monitoring device is an accelerometer.

7. A system as claimed in claim 5, wherein each motion monitoring device is an odometer.

**Patentansprüche**

1. System zum Auffinden von Routen für Fahrzeuge mit
—einer Basisstation (14, 15, 16, 23) mit einem Computer (16), der mit einer ersten Kommunikationseinrichtung (14, 15) verbunden ist;
—einer Vielzahl von fahrzeuggestützten mobilen Stationen (10 bis 13, 17 bis 21), wobei jede einen Empfänger (10) aufweist zum Empfangen von Signalen von einem Funknavigationssystem und zum Ableiten von Information von den empfangenen Signalen, die sich auf den Ort dieses Fahrzeugs bezieht, und eine zweite Kommunikationseinrichtung (12, 13) aufweist zum Kommunizieren mit der ersten Kommunikationseinrichtung, um dem Computer (16) auf den Ort bezogene Information zur Verfügung zu stellen;
—wobei der Computer ausgelegt ist, um auf der Basis bekannter Positionsdaten bekannter Orte und der auf den Ort bezogenen Information, die für diese Orte abgeleitet ist, Korrekturdaten zum Korrigieren der auf den Ort bezogenen Information für Fehler zu berechnen, die durch Funkausbreitungsunregelmäßigkeiten verursacht sind, dadurch gekennzeichnet, daß
—jede zweite Kommunikationseinrichtung (12, 13) ausgelegt ist, um auf einen Befehl von dem Fahrer des entsprechenden Fahrzeugs Information, die einen erwünschten Bestimmungsort festlegt, der bekannte Positionsdaten aufweist, und ein Signal, das dem Computer die Ankunft des Fahrzeugs an dem erwünschten Bestimmungsort anzeigt, zu der Basisstation zu übertragen;
—der Computer (16) ausgelegt ist, um die Korrekturdaten in Antwort auf die die Ankunft anzeigenden Signale von den Positionsdaten des erreichten Bestimmungsortes und der zugeordneten auf den Ort bezogenen Information zu berechnen, um die berechneten Korrekturdaten auf eine darauffolgend erhaltene auf den Ort bezogene Information anzuwenden, und um die Korrekturdaten auf den neuesten Stand zu bringen, wenn eine Ankunft eines Fahrzeugs an einem Bestimmungsort, der ein bekannter Ort ist, dem Computer signalisiert ist; und
—die erste Kommunikationseinrichtung (14, 15) ausgelegt ist, um die Fahrzeugrouteninformation, die durch den Computer erzeugt ist, zu senden.

2. System nach Anspruch 1, wobei die Kommunikationseinrichtung jeder mobilen Station einen mobilen Funkkommunikations-Sender/-Empfänger (12, 13) enthält, und wobei der Computer (16) an einem festen zentralen Ort steht.

3. System nach Anspruch 1 oder 2, wobei die Kommunikationseinrichtung (12, 13) jeder mobilen Station eine zellenförmige Funkkommunikationseinrichtung aufweist.

4. System nach einem der Ansprüche 1 bis 3, wobei jede mobile Einheit mit einem Sprachsynthesizer-Gerät ausgestattet ist, wodurch die Routeninformation dem Fahrer des zugehörigen Fahrzeugs mitgeteilt werden kann.

5. System nach einem der Ansprüche 1 bis 4, wobei jede mobile Station mit einem Fahrzeugbewegungs-Überwachungsgerät (19) ausgestattet ist, dessen Ausgang dem Computer (16) mitgeteilt wird.

6. System nach Anspruch 5, wobei jedes Bewegungs-Überwachungsgerät ein Beschleunigungsmesser ist.

7. System nach Anspruch 5, wobei jedes Bewegungs-Überwachungsgerät ein Kilometerzähler ist.

**Revendications**

1. Un système de détermination d'itinéraire par véhicule comprenant:
—une station de base (14, 15, 16, 23) possédant un ordinateur (16) relié à des premiers moyens de communication (14, 15);
—plusieurs stations mobiles (10 à 13, 17 à 21) à bord des véhicules, chacune d'entre elle possédant un récepteur (10) pour réceptionner des signaux depuis un système de navigation radio et pour dériver des signaux reçus une information concernant la localisation de ce véhicule, et des seconds moyens de communication (12, 13) pour communiquer avec le premier moyen de communication de façon à envoyer une information à l'ordinateur (16) à propos de la localisation;
—l'ordinateur étant agencé pour calculer, sur la base de données de position connues d'emplacement connu et de l'information d'emplacement dérivée pour ces emplacements, des données de correction pour corriger l'information concernant l'emplacement pour des erreurs provoquées par les irrégularités de propagation radio, caractérisé en ce que:
—chacun des seconds moyens de communication (12, 13) est agencé pour transmettre à la station de base, à partir de la commande du conducteur du véhicule correspondant, une information définissant une destination désirée en ayant connu la donnée de position et un signal indiquant à l'ordinateur l'arrivée du véhicule à la destination désirée;

—l'ordinateur (16) est agencé pour calculer la donnée de correction en réponse aux signaux indiquant l'arrivée, depuis la donnée de position de la destination atteinte et l'information associée concernant l'emplacement, afin d'appliquer la donnée de correction calculée à une information reçue ultérieurement concernant l'emplacement, et de mettre à jour les données de correction lorsque l'arrivée d'un véhicule à une destination, qui est un emplacement connue, est signalée à l'ordinateur; et

—le premier moyen de communication (14, 15) est agencé pour transmettre une information d'itinéraire de véhicle engendrée par l'ordinateur.

2. Un système selon la revendication 1, dans lequel le moyen de communication de chaque station mobile comprend un émetteur/récepteur (12, 13) mobile de communication radio, et dans lequel l'ordinateur (16) est situé à un emplacement central fixe.

3. Un système selon la revendication 1 ou la revendication 2, dans lequel le moyen de communication (12, 13) de chaque station mobile comprend un moyen cellulaire de communication radio.

4. Un système selon l'une quelconque des revendications 1 à 3, dans lequel chaque unité mobile comporte un dispositif de synthèse vocale, grâce auquel l'information d'itinéraire peut être communiquée au conducteur du véhicule associé.

5. Un système selon l'une quelconque des revendications 1 à 4, dans lequel chaque station mobile comporte un dispositif de surveillance (19) de mouvement de véhicule, dont la sortie est reliée à l'ordinateur (16).

6. Un système selon la revendication 5, dans lequel chaque dispositif de surveillance de mouvement est un accéléromètre.

7. Un système selon la revendication 5, dans lequel chaque dispositif de surveillance de mouvement est un odomètre.

MOBILE UNIT

Fig.1.

BASE STATION

EP 0 123 562 B1

Fig.2.

| POINT | X POS$^{\underline{N}}$ | XCCT$^{\underline{N}}$ | Y POS$^{\underline{N}}$ | YCCT$^{\underline{N}}$ |
|---|---|---|---|---|
| $x_1\ y_1$ | 2418 | +4 | 3130 | 0 |
| $x_2\ y_2$ | 2432 | +8 | 3132 | -3 |
| $x_3\ y_3$ | 2428 | +12 | 3126 | -4 |
| $x_4\ y_4$ | 2444 | +10 | 3126 | -7 |
| $x_5\ y_5$ | 2434 | +10 | 3124 | -1 |
| $x_6\ y_6$ | 2424 | +5 | 3116 | +11 |
| $x_7\ y_7$ | 2442 | +2 | 3115 | +12 |
| $x_8\ y_8$ | 2416 | -1 | 3110 | +2 |
| $x_9\ y_9$ | 2428 | -1 | 3111 | -3 |